# EUROPEAN PATENT SPECIFICATION

(11) **EP 4 031 787 B1**
(45) Date of publication and mention of the grant of the patent: **06.11.2024**
(21) Application number: 20771299.3
(22) Date of filing: 14.09.2020
(51) Int. Cl.: F16K 5/06, F16K 27/06, F16K 31/60

(54) **VALVE APPARATUS**
VENTILVORRICHTUNG
APPAREIL À SOUPAPE

(30) Priority: 20.09.2019 EP 19306155
(43) Date of publication of application: 27.07.2022
(73) Proprietor: Suez International, 92040 Paris la Défense Cedex (FR); Aliaxis Utilities & Industry SAS, 34140 Meze (FR)
(72) Inventor: TEIXEIRA PINTO, José Miguel, 34140 MEZE (FR); LE GOFF, Jean-Philippe, 34140 MEZE (FR); BERNABEU, Malena, 34140 MEZE (FR); ALACID, José, 34140 MEZE (FR); RAVEREAU, Jennifer, 78500 SARTROUVILLE (FR); ESTARZIAU, Philippe, 95390 SAINT PRIX (FR); MOHIER, Frédéric, 91720 PRUNAY SUR ESSONNE (FR)
(74) Representative: LLR
(86) International application number: PCT/EP2020/075592
(87) International publication number: WO 2021/052895

(56) References cited:
- EP-A1- 2 522 888
- WO-A1-94/24470
- DE-A1- 2 125 718
- DE-C1- 19 847 039
- KR-A- 20110 138 477
- US-A- 5 067 691
- US-A- 5 090 447
- US-B1- 9 897 216

## Description

The invention relates to the field of fluid handling technologies for water distribution networks. The invention more specifically concerns a valve apparatus intended to regulate a fluid flow from a fluid network.

Water meter valves are submitted to a large variety of constraints. Due to the fluid pressure encountered within the distribution network, the valve should be robust enough to resist to high pressure loads. It should be both resistant to mechanical overloads and maneuverable to ensure the opening and closing of the valve that may occur at various frequencies. Additionally, the valve should be chemically resistant, in particular to disinfectants, and also resistant to corrosion.

Known valves of the prior art are mainly made of brass. However, brass water meter valves are disinfectants sensitive. Moreover, their connection to composite meter (which are more and more used instead of metallic meters) is performed with a loose nut in brass, which requires a special attention when installing the valve, not to damage the composite meter at the transition between the composite meter and the brass valve.

In addition, brass is quite expensive. Moreover, it is a raw material whose price may evolve, thus leading to an uncertainty concerning the valve price. Therefore, it would be desirable to provide valves that have at least the same mechanical properties and chemical resistance as brass valves, but with a more foreseeable and stable price.

Also known are PPA (or polyphtalamide or high performance polyamide) valves. Polyphtalamides are known for their good mechanical properties, high dimensional stability and low density. Nevertheless, their water absorption property is not compatible with the field of water meter valves.

There also exist polypropylene water meter valves that may ensure a better transition between the composite meter and the valve. But this type of valves is not resistant enough to disinfectants. Also, the congestion of these valves is too high to replace the existing brass valves. Moreover, they are likely to be damaged due to overload.

Another solution of the prior art is a plastic valve reinforced with a metallic structure. The advantage of such a valve is that it exhibits both the mechanical resistance of a metallic valve and the resistance to corrosion of a plastic valve, as the metal is embedded into the polymer, that is to say not in direct contact with water. However, the plastic used in these valves has generally not the required chemical resistance, in particular to disinfectants.

Finally, document US 4047275 discloses a valve for gas distribution lines wherein a cap is fitted over the protruding end of the stem of the valve. This valve is subject to damages due to excessive torques applied to the stem. A wrench adapter has to be placed on the cap together with a shear pin as a safety feature.

Document WO 94/24470 discloses a valve apparatus comprising a body, a gate, a stem comprising a lower part intended to activate the gate, and a handle surrounding the upper part of the stem. The inner surface of the handle is only in contact with the upper part of the stem and a part of the handle abuts against the body. This results in a minimal contact surface of the handle against the stem and the body. The load applied to the handle can only be transmitted through this contact surface, which means high stress levels at this surface.
Document US 9897216 B1 relates to a ball valve and comprises an inner valve unit having a ball valve unit and a valve seat in which the ball valve unit is received. The valve seat is made of plastic. The ball valve unit has a ball valve and two retainers, wherein each retainer has a central hole so as to clamp the ball valve between the two retainers. The ball valve has a through hole defined diametrically there through. A shaft extends from the ball valve. The valve seat has a tubular shank, and a lateral hole is defined radially through the shank, and a connection hole is defined in the distal end of the shank. The shank has an inner hole. The lateral hole is located corresponding to the two central holes of the two retainers. The ball valve is located in the inner hole and rotatable to communicate the through hole with the lateral hole and the central holes. The distal end of the shaft extends through the connection hole of the valve seat.

The invention thus aims to provide a valve for controlling the fluid flow within a fluid network, that is small and compact, easy to install, resistant to disinfectants and corrosion, while capable of facing pressure loads and mechanical overloads.

To this end, an aspect of the invention is a valve apparatus intended to regulate a fluid flow from a fluid network comprising:
a. a body through which the fluid is intended to flow, configured to connect the valve apparatus to the fluid network;
b. a gate positioned inside the body and configured to move between an open position in which the fluid is intended to flow through the body and a closed position in which the fluid is not intended to flow through the body;
c. a stem extending along a first axis Z comprising an upper part and a lower part, the lower part being connected to the gate, the body comprising a cylindrical neck extending around the first axis and adapted to surround the stem;
d. a handle comprising a second circular rib positioned around the first axis Z, the second circular rib being configured to engage with the upper part of the stem and the neck.

According to the invention, the body and the stem comprise a first abutment for the second circular rib of the handle in translation according to the first axis Z, the first abutment being configured so as to form a gap between the handle and the upper part of the stem, the first abutment being further configured to form at least one contact surface with the second circular rib of the handle, and a second abutment for the handle in rotation according to the first axis Z,
and the second circular rib of the handle comprises an inner surface configured to form a linear guideway of the upper part of the stem according to the first axis Z, so that a rotation of the handle around the first axis Z rotably moves the stem around the first axis Z relative to the body so as to move the gate between the open position and the closed position.

The valve apparatus may comprise a loose nut configured to connect the valve apparatus to the fluid network, wherein the loose nut is preferably in polymer.

According to the invention, the neck comprises an inner planar surface substantially perpendicular to the first axis Z and the inner planar surface is one of the at least one contact surface of the neck.

Advantageously, the neck further comprises an upper surface substantially perpendicular to the first axis Z and the upper surface is one of the at least one contact surface of the neck.

According to the invention, the neck comprises an inner surface and an outer surface, the handle comprises:
a. a first circular rib positioned around the first axis Z, having an inner surface at least partially in contact with the outer surface of the neck of the body; and
b. the second circular rib having an inner surface partially in contact with the upper part of the stem and an outer surface partially in contact with the inner surface of the neck of the body,
wherein the inner surface of the second circular rib is the inner surface configured to form the linear guideway of the upper part of the stem according to the first axis Z.

Advantageously, the stem has a non-circular section.

Advantageously, the gate, the stem and/or the handle is/are in plastic, preferably polypropylene.

Advantageously, the body, and/or the stem is/are in polymer, preferably polyphenylene sulfide.

Advantageously, the polymer contains reinforcing materials.

Advantageously, the plastic contains reinforcing materials, preferably carbon fiber, and more preferably glass fibers.

In an embodiment of the valve apparatus according to the invention, the handle comprises a longitudinal rib extending from the first circular rib along a second axis X, substantially perpendicular to the first axis Z.

In another embodiment of the valve apparatus according to the invention, the handle further comprises at least one additional rib extending from the longitudinal rib and secant to the longitudinal rib, each of the at least one additional rib forming an incident angle to the longitudinal rib.

Advantageously, the handle comprises a plurality of additional ribs, the incident angles being preferably equal in absolute value to at least one other.

Advantageously, the at least one additional rib extending from the longitudinal rib is perpendicular to the longitudinal rib.

Advantageously, the additional ribs extending from the longitudinal rib are positioned on both side of the longitudinal rib.

Advantageously, the body comprises at least one rib extending from the neck radially substantially perpendicular to the first axis Z.

Advantageously, the cylindrical neck extends from a base, and the outer surface of the cylindrical neck comprises a fillet at the base.

The accompanying drawings illustrate various non-limiting, exemplary, innovative aspects in accordance with the present description:
Figure 1 represents a cut view of one embodiment of the valve apparatus and an isometric view of the body according to the invention;
Figure 2 represents a cut view of another embodiment of the valve apparatus and an isometric view of the body according to the invention;
Figure 3 represents an exploded view of a first embodiment of the valve apparatus according to the invention;
Figure 4 represents an exploded view of a second embodiment of the valve apparatus according to the invention;
Figure 5 represents a bottom view of an embodiment of the handle of the valve apparatus according to the invention;
Figure 6 represents a bottom view of another embodiment of the handle of the valve apparatus according to the invention;
Figure 7 represents an isometric view of an embodiment of the handle of the valve apparatus with a corresponding body according to the invention;
Figure 8 represents an isometric view of another embodiment of the handle of the valve apparatus according to the invention;
Figure 9 represents a schematic view of a test bench of the valve apparatus according to the invention.

For the sake of clarity, the same elements have the same references in the various figures.

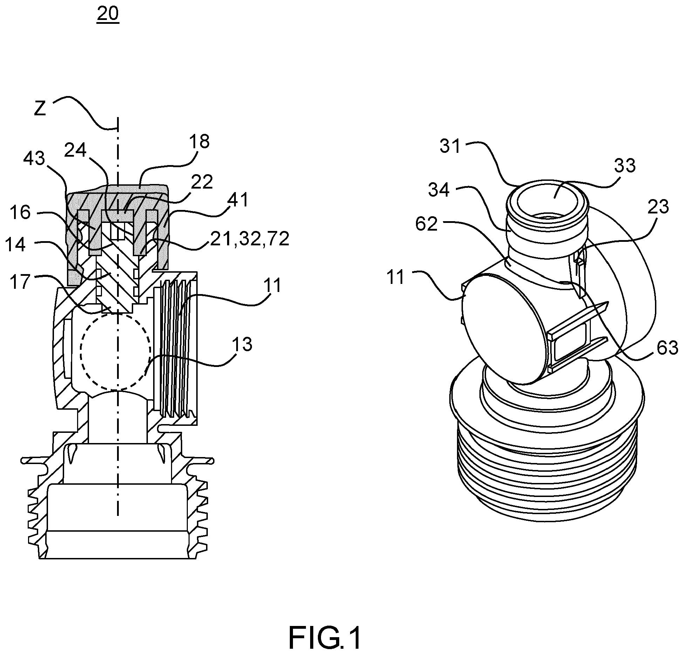

Figure 1 represents a cut view of one embodiment of the valve apparatus 20 and an isometric view of the body 11 according to the invention. The valve apparatus 20 is intended to regulate a fluid flow from a fluid network and comprises a body 11 through which the fluid is intended to flow, configured to connect the valve apparatus 20 to the fluid network. The valve apparatus comprises a gate 13 positioned inside the body 11 and configured to move between an open position in which the fluid is intended to flow through the body 11 and a closed position in which the fluid is not intended to flow through the body 11. The valve apparatus comprises a stem 14 extending along a first axis Z comprising an upper part 16 and a lower part 17, the lower part 17 being connected to the gate 13. The body comprises a cylindrical neck 31 extending around the first axis Z and is adapted to surround the stem 14. The valve apparatus comprises a handle 18 comprising a second circular rib 43 positioned around the first axis Z, the second circular rib 43 is configured to engage with the upper part 16 of the stem 14 and the neck 31. According to the invention, the body 11 and the stem 14 comprise a first abutment 21 of the second circular rib 43 of the handle 18 in translation according to the first axis Z, and the first abutment 21 is configured so as to form a gap 22 between the handle 18 and the upper part 16 of the stem 14. The first abutment 21 is further configured to form at least one contact surface 32 with the second circular rib 43 of the handle 18. The body 11 comprises a second abutment 23 of the handle 18 in rotation according to the first axis Z. Furthermore, the second circular rib 43 of the handle 18 comprises an inner surface 24 configured to form a linear guideway of the upper part 16 of the stem 14 according to the first axis Z, so that a rotation of the handle 18 around the first axis Z rotably moves the stem 14 around the first axis Z relative to the body 11 so as to move the gate 13 between the open position and the closed position.

The principle of the invention is based on the cooperation of the handle 18 with the body 11, so that the upper part 16 of the stem 14 is not in direct contact with the handle 18. The handle 18 is mobile in rotation around the first axis Z until the second abutment 23. The handle 18 is mobile in translation along the first axis Z until the first abutment 21. When in abutment against the first abutment 21, the handle 18 is in its operating position, i.e. the handle can rotate around the first axis Z until the second abutment 23. Once in operating position, the rotation of the handle 18 results in the actuation of the gate 13 between its open and closed position and vice versa.

The design of the handle 18 enables a better load distribution to the stem 14 and the body 11 in comparison with the valve apparatus of the prior art. Thanks to the second circular rib 43, the handle forms a contact both with the stem 14 and the neck 31 at the surface 21. In other words, the stem 14 and the neck 31 of the body 11 forms the first abutment 21 against which the second circular rib 43 of the handle abuts. The second circular rib 43 contacts the first abutment surface 21 of the stem 14 and the body 11. The force applied to the handle can be transmitted to the body and the neck, resulting in a better resistance to pressure loads and mechanical overloads.

Since the upper part 16 of the stem 14 does not come into direct contact with the handle 18 and thanks to the first abutment 21, there is a better distribution of the overload on the handle 18 to the body 11, thus enabling the body 11 to absorb the overload. This better distributing overload enables an extension of the lifetime of the valve apparatus. Indeed, when submitted to a 80 kg overload test, there is shown an homogeneous distribution of the loads applied on the valve apparatus.

In an embodiment of the invention, the neck 31 comprises an inner planar surface 72 substantially perpendicular to the first axis Z and the inner planar surface 72 is one of the at least one contact surface 32 of the neck 31. The inner planar surface 72 is a contact surface between the handle 18 and the body 11.

The gap 22 allows the load of the handle 18 to be directly transferred to the body 11, without touching the stem 14 on its upper part. The load is therefore not allocated on a single point, or on a limited part of the valve apparatus corresponding to the stem. Contrary to existing valve apparatus of the prior art, the load is allocated to a complete surface, corresponding to the first abutment 21. In the embodiment depicted in figure 1, the load applied on the handle 18 is allocated on the inner planar surface 72, i.e. on a ring. The effort is thus distributed on the whole handle and body, and in all directions (i.e. isotropically distributed), thus preventing premature wear and breaking risks.

The handle 18 is configured to engage with the upper part 16 of the stem 14. This engagement, as it will be detailed below, allows maneuvering the stem 14 so as to rotate. This means that the supporting function of the handle by the body and the maneuvering function of the stem by the handle are dissociated. On the one hand, the handle 18 and the body 11 are designed so that the handle 18 abuts against the body 11 and the stem 14 according to the first abutment 21, thus ensuring the right positioning of the handle relative to the body and the stem. And on the other hand, once the handle 18 is in the right positioning relative to the body and the stem, the handle 18 is designed so that its rotation leads to the rotation of the stem 14.

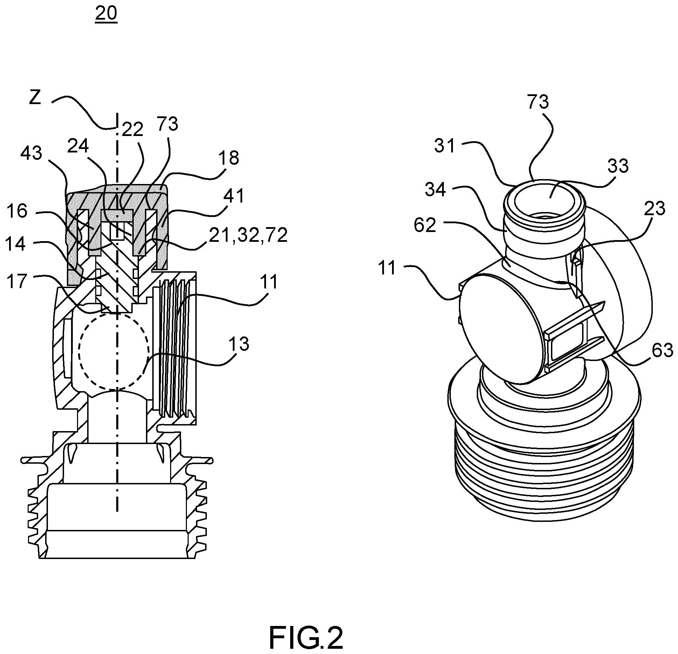

Figure 2 represents a cut view of another embodiment of the valve apparatus and an isometric view of the body according to the invention. As previously explained, the body 11 comprises a first abutment 21 of the handle 18 in translation according to the first axis Z, and the first abutment 21 is configured so as to form a gap 22 between the handle 18 and the upper part 16 of the stem 14. The first abutment 21 is further configured to form at least one contact surface 32 with the handle 18. The body 11 comprises a second abutment 23 of the handle 18 in rotation according to the first axis Z. Furthermore, the handle 18 comprises an inner surface 24 configured to form a linear guideway of the upper part 16 of the stem 14 according to the first axis Z, so that a rotation of the handle 18 around the first axis Z rotably moves the stem 14 around the first axis Z relative to the body 11 so as to move the gate 13 between the open position and the closed position. In this embodiment the body 11 comprises a cylindrical neck 31 extending around the first axis Z and adapted to surround the stem 14, and the neck 31 further comprises an upper surface 73 substantially perpendicular to the first axis Z and the upper surface 73 is one of the at least one contact surface 32 of the neck 31. The upper surface 73 is a contact surface between the handle 18 and the body 11.

Noteworthy is that the invention has at least three variants. According to a first variant, the first abutment 21 of the handle 18 against the body 11 is the inner planar surface 72. According to a second variant, the first abutment 21 of the handle 18 against the body 11 is the upper surface 73. According to a third variant, the first abutment 21 of the handle 18 against the body 11 consists of both the inner planar surface 72 and the upper surface 73. Both the handle 18 and the neck 31 are designed and dimensioned accordingly to enable the right positioning of the handle 18 against the first abutment 21. In the third variant - in which the first abutment 21 of the handle 18 against the body 11 is obtained by both the inner planar surface 72 and the upper surface 73- the height of the neck 31 between these two surfaces 72 and 73 is equal to the height of the rib 43 of the handle 18, thus leading to the abutment of the rib 43 against the inner planar surface 72 together with the abutment of the upper surface 73 against the lower part of the handle 18.

When the first abutment 21 is both the inner planar surface 72 and the upper surface 73, the contact surface according to which the load transfer from the handle to the body can be performed is greater than in the first or second variant, thus enabling a wider distribution of the loads through the valve apparatus.

As visible on the right part of Figure 2, the cylindrical neck 31 extends from a base 62. The outer surface 34 of the cylindrical neck 31 may comprise a fillet 63 at the base 62. The presence of this fillet enables to reduce the maximum stress applied to the body 11. High fillet radii are preferred in order to improve the effect of reduction of the maximum stress.

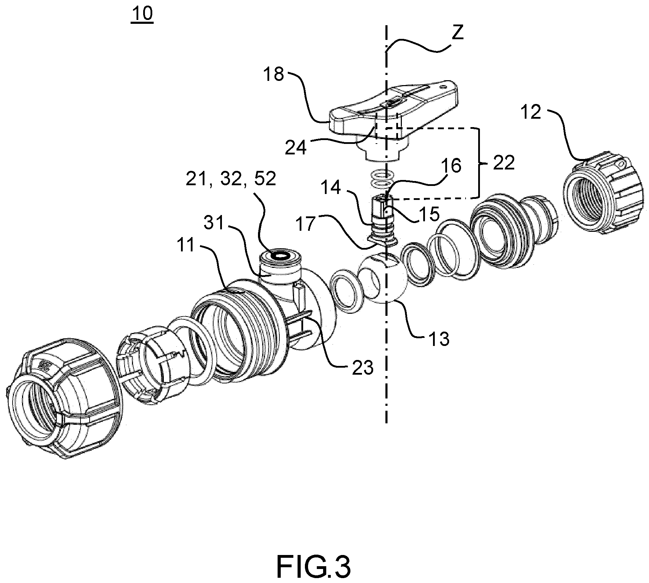

Figure 3 represents an exploded view of a first embodiment of the valve apparatus 10 according to the invention. This first embodiment is a linear valve apparatus. In this embodiment, the fluid flow flows linearly through the body 11.

The gate 13 is represented as a perforated ball whose orientation around the first axis determines the open or the closed position of the valve apparatus. The invention applies similarly to other types of gate, for example a shutter that closes the body 11 in the closed position and liberates the flow path through the body 11 in the open position. The gate 13 may also be in a position between the open and the closed position, that is to say partly open.

As represented in Figure 3, the stem 14 has a non-circular section 15, corresponding to the inner section of the part of the handle 18 that engages with the upper part 16 of the stem. This enables to make the stem rotate around the first axis Z when rotating the handle 18. The non-circular section 15 may be a rectangular or square section. The invention applies with any other polygonal section of the stem, provided that the cooperating part of the handle 18 has the complementary section, so as to enable the movement transmission of the rotation of the handle to the stem. For example, the stem 14 may have an octagonal section.

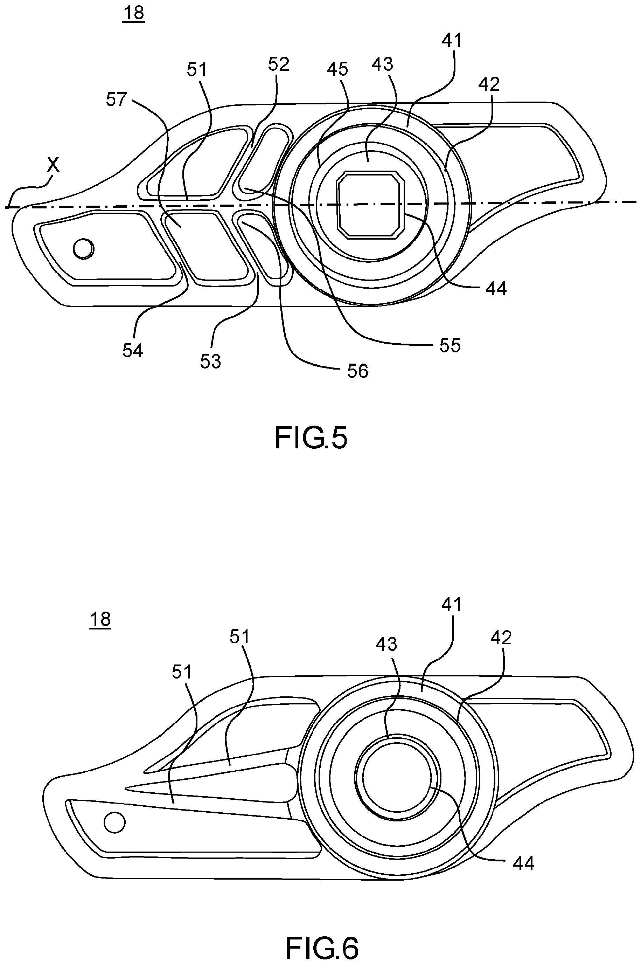

Nevertheless, and as depicted in Figure 6, the section of the stem 14 may also be circular. In order to mount the handle and the stem in a rotationally fixed manner, it is necessary to add a fixing element between the handle and the stem.

The handle 18 is configured to engage with the upper part 16 of the stem 14. In this embodiment of the linear valve apparatus, the gate 13 comprises a recess and the lower part 17 of the stem 14 comprises a complementary part that fits into the recess. The gate 13 is mounted in a rotationally fixed manner to the stem 14. Thanks to the complementary design of the handle 18 and the stem 14 and the connection of the stem 14 to the gate13, a movement of rotation around the first axis Z of the handle 18 is transmitted to the stem 14 that rotates around the first axis Z and makes the gate 13 rotate. Nevertheless, the connection of the stem 14 with the gate 13 may be obtained by other means known by a person skilled in the art, for example with threaded connections, triangular shape, or with a connection obtained by an assembly technique such as ultrasound welding, gluing, etc.

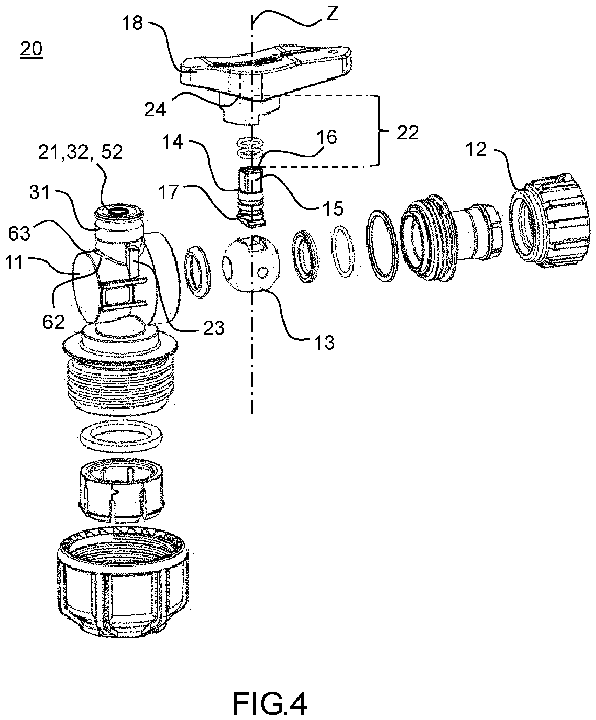

Figure 4 represents an exploded view of a second embodiment of the valve apparatus 20 according to the invention. This second embodiment is an angular valve apparatus. In this embodiment, the fluid flow flows through the body 11 according two different axes that form an angle different from 180°. Such angular valve apparatus enables to direct the flow in the desired direction, for example (but not limited to this example), from a direction extending along an axis perpendicular to the first axis Z to a direction parallel to the first axis Z.

The valve apparatus 10, 20 comprises a loose nut 12 configured to connect the valve apparatus 10, 20 to the fluid network. The loose nut 12 may be a threaded loose nut. Advantageously, the loose nut 12 is in polymer. The loose nut 12 in polymer makes it easier to connect to a composite water meter without damaging the threads on the composite water meter. It is to be noted that the invention also applies to a metallic loose nut 12, for example in brass, steel, aluminum, or a non-metallic loose nut 12 in any technical polymer able to bear the applied stress, for example polyphtalmid, Polyoxymethylene, fiber glass reinforced Polyacrylamide, Polyphenylene Sulfone, etc.

Figure 5 represents a bottom view of an embodiment of the handle 18 of the valve apparatus according to the invention. As can be seen from Figures 1 and 2, the neck 31 comprises an inner surface 33 and an outer surface 34. These inner and outer surfaces 33, 34 extend substantially parallel to the first axis Z. The invention also applies in the case these surfaces form an angle with the first axis Z, provided that the complementary part of the handle 18 also forms the same angle with the first axis Z. For the ease of understanding, we will explain the design in the case of inner and outer surfaces 33, 34 extending substantially parallel to the first axis Z.

The handle 18 comprises a first circular rib 41 positioned around the first axis Z, having an inner surface 42 at least partially in contact with the outer surface 34 of the neck 31 of the body 11. The inner surface 42 is totally in contact with the outer surface 34 of the neck 31 of the body 11 in the embodiment in which the planar surface 73 is part of the first abutment 21. The handle 18 comprises a second circular rib 43 positioned around the first axis Z, inside the first circular rib 41, having an inner surface 44 partially in contact with the upper part 16 of the stem 14 and an outer surface 45 at least partially in contact with the inner surface 33 of the neck 31 of the body 11. Here again, the outer surface 45 is totally in contact with the inner surface 33 of the neck 31 of the body 11 in the embodiment in which the planar surface 73 is part of the first abutment 21. The inner surface 44 is partially in contact with the upper part 16 of the stem 14 since there is the gap 22 designed so that the upper part 16 of the stem 14 does not touch the handle 18. The inner surface 44 of the second circular rib 43 is the inner surface 24 configured to form the linear guideway of the upper part 16 of the stem 14 according to the first axis Z.

This design of the handle results in an enlarged contact surface between the handle 18 and the body 11. As can be seen in Figures 1 and 2, the neck 31 of the body is surrounded by the first circular rib 41 and the second circular rib 43 of the handle 18. The outer surface of the neck 31 is in contact with the inner surface 42 of the first circular rib 41 and the inner surface of the neck 31 is in contact with the outer surface 45 of the second circular rib 43. The two circular ribs 41, 43 ensure the right positioning of the handle 18 in relation to the body 11. The enlarged contact surface between the handle 18 and the body 11 ensures an enhanced load distribution to the body 11 when load is applied to the handle. Additionally, the design of the handle 18 with its two circular ribs 41, 43 makes the assembly of the handle on the body easy. Indeed, the mounting of the handle 18 on the body 11 only requires a slide of the handle on the neck of the body to clip the handle 18 on the body 11. In order to remove the handle efrom the body, an operator only needs to draw the handle to unclip the handle from the body. The mounting and unmounting of the handle 18 is thus rendered easy, without requiring additional elements such as thread, screw, etc.

Advantageously, the handle 18 comprises a longitudinal rib 51 extending from the first circular rib 41 along a second axis X, substantially perpendicular to the first axis Z. The longitudinal rib 51 allows to improve the mechanical resistance of the handle, thus extending its lifetime.

Advantageously, the handle 18 further comprises at least one additional rib 52, 53, 54 extending from the longitudinal rib 51 and secant to the longitudinal rib 51, each of the at least one additional rib 52, 53, 54 forming an incident angle 55, 56, 57 to the longitudinal rib 51. These additional ribs 52, 53 and/or 54 prevent the handle 18 from breaking along the longitudinal rib 51.

In an alternative, the incident angles 55, 56, 57 of the additional ribs 52, 53, 54 are preferably equal in absolute value to at least one other 56, 57, 55.

At least one additional rib 52, 53, 54 extending from the longitudinal rib 51 may be perpendicular to the longitudinal rib 51.

Advantageously the additional ribs 52, 53, 54 extending from the longitudinal rib 51 are positioned on both sides of the longitudinal rib 51.

These various embodiments with additional ribs enable to spread the stress applied to the handle through the whole handle 18.

Figure 6 represents a bottom view of another embodiment of the handle 18 of the valve apparatus according to the invention. In this embodiment, the longitudinal rib 51 extends from the first circular rib 41 substantially along the second axis X, that is to say slightly offset in its orientation in relation to the second axis X. The invention also encompasses the presence of such longitudinal ribs to improve the mechanical resistance of the handle, thus extending its lifetime.

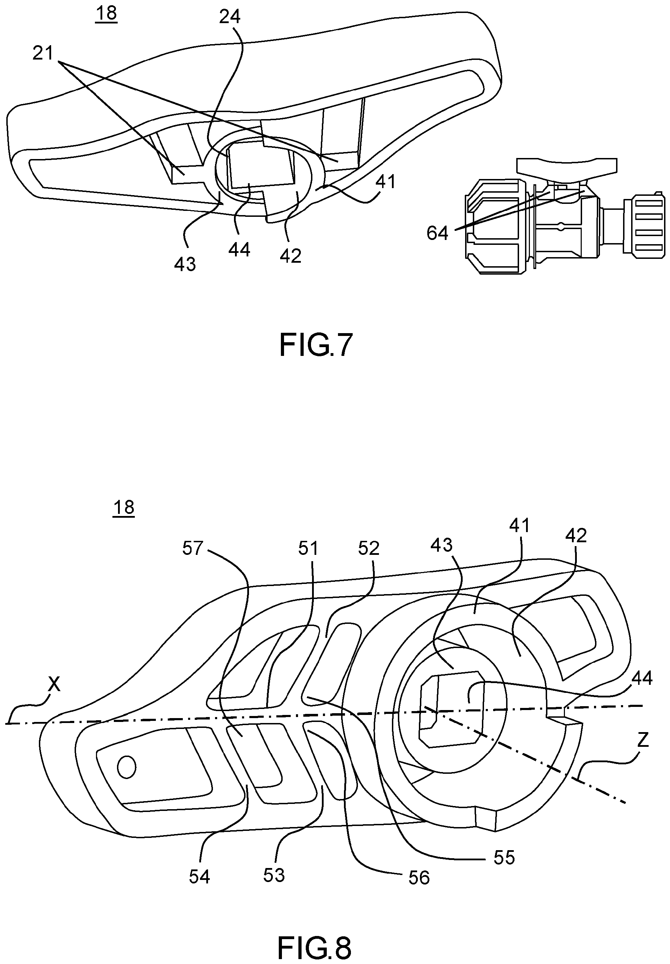

Figure 7 represents an isometric view of an embodiment of the handle 18 of the valve apparatus with a corresponding body according to the invention. The handle is configured to engage with the upper part 16 of the stem 14. The inner surface 44 of the circular rib 43 is the linear guideway of the upper part 16 of the stem 14. In this configuration the first abutment 21 is obtained with the ribs extending from the circular rib 43 abutting against complementary surfaces of the body 11 extending similarly from the neck 31. The body 11 also comprises in this embodiment at least one rib 64 extending from the neck 31 radially substantially perpendicular to the first axis Z, as depicted on the lower right part of figure 7 (the scale of the body is not respected compared to the scale of the handle 18). This also enables a load transfer from the handle to the body, thus enabling a distribution of the loads through the valve apparatus.

Figure 8 represents an isometric view of another embodiment of the handle 18 of the valve apparatus according to the invention. This isometric view shows the handle 18 comprising the first circular rib 41 positioned around the first axis Z, having an inner surface 42 at least partially in contact with the outer surface 34 of the neck 31 of the body 11; and the second circular rib 43 positioned around the first axis Z, having an inner surface 44 partially in contact with the upper part 16 of the stem 14 and an outer surface 45 partially in contact with the inner surface 33 of the neck 31 of the body 11, the inner surface 44 of the second circular rib 43 being the inner surface 24 configured to form the linear guideway of the upper part 16 of the stem 14 according to the first axis Z.

The gate 13, the stem 14 and/or the handle 18 may be in plastic, preferably polypropylene. Plastic valves, with or without reinforcing frames, are more chemically resistant to disinfectant and/or corrosion than brass valves. Preferably, the valve apparatus is a fully plastic valve, free of reinforcing frame such as a metal frame. In other words, the valve apparatus components do not comprise a metallic structure.

Advantageously, the plastic contains reinforcing fillers also considered as reinforcing materials, preferably carbon fiber, and more preferably glass fibers.

The body 11 and/or the stem 14 may be in polymer, preferably polyphenylene sulfide. This composite plastic combines mechanical resistance and chemical resistance. The polymer may also be polyphenylsulfone (PPSU), polyphthalamide (PPA), polyethylene (PE) or polypropylene (PP). The polymer may contain reinforcing materials.

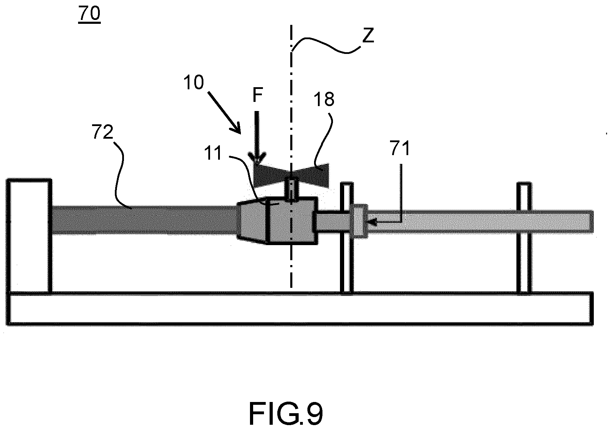

Figure 9 represents a schematic view of a test bench 70 of the valve apparatus 10 according to the invention. The test bench comprises a standard meter support 71 in steel with brass connection. This enables to demonstrate the compatibility of the valve apparatus 10 with existing supports. The valve apparatus 10 is connected to a 70 cm long HDPE pipe (HDPE is the acronym of High Density PolyEthylene). The pressure inside the pipe, and thus through the body 11 of the valve apparatus 10, is 16 bar. The test consists in applying a force, noted F on Figure 9, on the outside extremity of the handle 18 as depicted on Figure 9. The force F is 800 N and is applied on the handle 18 less than 3 seconds. This test represents a sudden shock on the handle 18, for example when hit by a shoe. It is considered that the test succeeds if the valve apparatus does not break and is still water tight after load release.

Four various valve apparatus 10 are tested. The body 11 of these four valve apparatus is in polyphenylene sulfide, and includes glass fibers as reinforcing material. The tested valve apparatus 10 are linear valve apparatus, as depicted in Figure 3, with various nominal diameter (25 and 32 mm), and internal threads (1"and 3/4", i.e. 2,54 cm and 1,9 cm). The four tested valve apparatus passed successfully the test. Passing such an overload test indicates a homogeneous distribution of the loads applied on the valve apparatus according to the invention.

The valve apparatus according to the invention enables to reduce the risk of damage due to overload as well as reduce the risk for leaks under operating conditions, while not using a reinforced structure. Furthermore, the valve apparatus according to the invention is chemically, in particular disinfectant, resistant.

Brass valves and polymer valves were submitted to an accelerated aging test. For the aging test, the polymer valves have a body in polyphthalamide (PPA) or polyphenylene sulfide (PPS), and are reinforced with glass fibers as reinforcing material. Also, they do not contain any reinforcing structure, such as a metallic reinforcing structure. An experimental design was built in order to take into account the chemical resistance of materials, the impact of valve aging on water quality and the performance against brass reference valve.

The valves are aged under pressure with the following internal conditions:
a. Network water (no disinfectant);
b. Network water + chlorine (4 ppm);
c. Network water + chlorine dioxide (1 ppm).

The aging conditions applied on the aging test bench are:
a. External conditions: dry or H2O + NaCl (2 g/L) (i. e. with and without external exposure to salted water);
b. Temperature: T= 40°C;
c. Pressure: P = 6 bar;
d. pH = 7,2;
e. Flow rate: q = 200 L/h.

More than 200 of each type of valves were installed in the aging bench (brass, PPA, PPS). The valves performances were assessed after 3, 6, 12 and 18 months of aging to obtain intermediate evaluations of valves performance. The valve failure during the aging period is an eliminatory criterion.

During the 12-month aging process no valve failure was recorded, which indicates that the valves withstand internal pressure as required. Macroscopic and microscopic observations were made on the valves.

The macroscopic observations on brass valves highlights that all the accelerated conditions (with and without disinfectant) induced a modification of the aspects of brass internal valve bodies from a shiny aspect before aging to a matt aspect after accelerated aging. Microscopic observations indicated that the aging with and without disinfectant induced deposit formation. In case of chlorine exposure, limited general corrosion of brass material can be observed. A green coloration of corrosion products suggests that the oxidation of the copper contained in the brass induced the formation of copper carbonate hydroxide. No pitting corrosion or crevice or material loss were observed on the brass valves.

Evolutions of valve properties were evaluated based on the valve mass and the valve internal diameter. No variation of valve mass and of the internal diameter was measured for the brass valves after during all the aging sequences.

Evaluations of the impact of brass valves on water quality prior and after accelerated aging were performed on the basis of the French "Attestation de Conformité Sanitaire" (Certificate of Sanitary Compliance) protocol. Analysis were performed on:
a. Test water organoleptic properties;
b. Physical-chemical properties (pH, conductivity, total organic carbon and chlorine demand);
c. Mineral micro-pollutant content in test waters.

Brass valves prior and after aging did not induce noticeable taste and odor to test waters. No pH or conductivity variations were measured on the test waters whatever the conditions. Mineral analysis did not detect any metal leaching in the test waters. In conclusion, brass valves, reference market products, did not deteriorate the quality of the water prior and after aging.

The same aging tests were performed with polymer valves. Macroscopic and microscopic observations performed on the PPA valves highlight that 12-month of internal exposure to both water containing chlorine and water containing chlorine dioxide impacted the polymer material aspect. The internal surface became slightly eroded and glass fibers were visible for both conditions for PPA, whereas this is not the case for PPS valves. Internal surface of PPS valves exposed to chlorine demonstrated only limited whitening.

Evolutions of polymer valve properties were evaluated based on the valve mass and the valve internal diameter. The aging induced an increase of polymer (PPA) valve mass (from 1,2 to 1,8% under internal exposure and from 2,4 to 3,0% under internal exposure and external salted water). This observation could be explained by polymer water uptake phenomenon. However, this phenomenon is not observed for PPS valves. The internal diameter for polymer (PPA) valves exposed to water containing chlorine is slightly affected by the aging conditions after 12 months of exposure (-0,8% compared to a new polymer (PPA) valve under internal exposure only, but insignificant when exposed to water containing chlorine dioxide and also insignificant under internal exposure and external salted water). No leakage or other valve failure was induced due to erosion. When exposed to external salted water, the maneuverability of the polymer valve was not affected compared to brass valves.

The valve according to the invention is therefore resistant to disinfectants and corrosion, and also capable of facing pressure loads and mechanical overloads.

## Claims

1. Valve apparatus (10, 20) intended to regulate a fluid flow from a fluid network, the valve apparatus comprising:
a. a body (11) through which the fluid is intended to flow, configured to connect the valve apparatus (10, 20) to the fluid network;
b. a gate (13) positioned inside the body (11) and configured to move between an open position in which the fluid is intended to flow through the body (11) and a closed position in which the fluid is not intended to flow through the body (11);
c. a stem (14) extending along a first axis Z comprising an upper part (16) and a lower part (17), the lower part (17) being connected to the gate (13); the body (11) comprising a cylindrical neck (31) extending around the first axis Z and adapted to surround the stem (14), wherein the neck (31) comprises an inner planar surface (72) substantially perpendicular to the first axis Z and the inner planar surface (72) is one of the at least one contact surface (32, 72) of the neck (31);
a handle (18) comprising a second circular rib (43) positioned around the first axis Z, the second circular rib (43) being configured to engage with the upper part (16) of the stem (14) and the neck (31);and wherein the body (11) and the stem (14) comprise a first abutment (21) for the second circular rib (43) of the handle (18) in translation according to the first axis Z, the first abutment (21) being configured so as to form a gap (22) between the handle (18) and the upper part (16) of the stem (14), the first abutment (21) being further configured to form at least one contact surface (32, 72, 73) with the second circular rib (43) of the handle (18), and wherein the body (11) comprises a second abutment (23) for
the handle (18) in rotation according to the first axis Z,
wherein the second circular rib (43) of the handle (18) comprises an inner surface (24) configured to form a linear guideway of the upper part (16) of the stem (14) according to the first axis Z, so that a rotation of the handle (18) around the first axis Z rotably moves the stem (14) around the first axis Z relative to the body (11) so as to move the gate (13) between the open position and the closed position, and
wherein the neck (31) comprises an inner surface (33) and an outer surface (34), the valve apparatus being **characterised in that** the handle (18) comprises:
a. a first circular rib (41) positioned around the first axis Z, having an inner surface (42) at least partially in contact with the outer surface (34) of the neck (31) of the body (11); and
b. the second circular rib (43) having an inner surface (44) partially in contact with the upper part (16) of the stem (14) and an outer surface (45) partially in contact with the inner surface (33) of the neck (31) of the body (11).

2. Valve apparatus (10, 20) according to claim 1, comprising a loose nut (12) configured to connect the valve apparatus (10, 20) to the fluid network, wherein the loose nut (12) is preferably in polymer.

3. Valve apparatus (10, 20) according to claim 1 or claim 2, wherein the neck (31) further comprises an upper surface (73) substantially perpendicular to the first axis Z and the upper surface (73) is one of the at least one contact surface (32, 72, 73) of the neck (31).

4. Valve apparatus (10, 20) according to one of the preceding claims, wherein the stem (14) has a non-circular section (15).

5. Valve apparatus (10, 20) according to one of the preceding claims, wherein the gate (13), the stem (14) and/or the handle (18) is/are in plastic, preferably polypropylene.

6. Valve apparatus (10, 20) according to one of the preceding claims, wherein the body (11), and/or the stem (14) is/are in polymer, preferably polyphenylene sulfide.

7. Valve apparatus (10, 20) according to claim 6, wherein the polymer contains reinforcing materials.

8. Valve apparatus (10, 20) according to claim 5, wherein the plastic contains reinforcing materials, preferably carbon fiber, and more preferably glass fibers.

9. Valve apparatus (10, 20) according to one of the preceding claims, wherein the handle (18) comprises a longitudinal rib (51) extending from the first circular rib (41) along a second axis X, substantially perpendicular to the first axis Z.

10. Valve apparatus (10, 20) according to claim 9, wherein the handle (18) further comprises at least one additional rib (52, 53, 54) extending from the longitudinal rib (51) and secant to the longitudinal rib (51), each of the at least one additional rib (52, 53, 54) forming an incident angle (55, 56, 57) to the longitudinal rib (51).

11. Valve apparatus (10, 20) according to claim 10, wherein the handle (18) comprises a plurality of additional ribs (52, 53, 54), the incident angles (55, 56, 57) being preferably equal in absolute value to at least one other (56, 57, 55).

12. Valve apparatus (10, 20) according to claim 10 or 11, wherein the at least one additional rib (52, 53, 54) extending from the longitudinal rib (51) is perpendicular to the longitudinal rib (51).

13. Valve apparatus (10, 20) according to claim 11, wherein the additional ribs (52, 53, 54) extending from the longitudinal rib (51) are positioned on both side of the longitudinal rib (51).

14. Valve apparatus (10, 20) according to one of the preceding claims, wherein the body (11) comprises at least one rib (64) extending from the neck (31) radially substantially perpendicular to the first axis Z.

15. Valve apparatus (10, 20) according to one of the preceding claims, wherein the cylindrical neck (31) extends from a base (62), and the outer surface (34) of the cylindrical neck (31) comprises a fillet (63) at the base (62).

## Patentansprüche

1. Ventilvorrichtung (10, 20), die dazu bestimmt ist, einen Fluidstrom aus einem Fluidnetz zu regulieren, wobei die Ventilvorrichtung aufweist:
a. einen Körper (11), durch den das Fluid fließen soll, der konfiguriert ist, die Ventilvorrichtung (10, 20) mit dem Fluidnetz zu verbinden;
b. einen Schieber (13), der innerhalb des Körpers (11) angeordnet und so konfiguriert ist, dass er sich zwischen einer offenen Position, in der das Fluid durch den Körper (11) fließen soll, und einer geschlossenen Position, in der das Fluid nicht durch den Körper (11) fließen soll, bewegt;
c. einen Schaft (14), der sich entlang einer ersten Achse Z erstreckt und einen oberen Teil (16) und einen unteren Teil (17) aufweist, wobei der untere Teil (17) mit dem Schieber (13) verbunden ist; wobei der Körper (11) einen zylindrischen Hals (31) aufweist, der sich um die erste Achse Z herum erstreckt und so gestaltet ist, dass er den Schaft (14) umgibt, wobei der Hals (31) eine innere ebene Fläche (72) aufweist, die im Wesentlichen senkrecht zu der ersten Achse Z ist, und die innere ebene Fläche (72) eine der mindestens einen Kontaktfläche (32, 72) des Halses (31) ist;
einen Griff (18), der eine zweite kreisförmige Rippe (43) aufweist, die um die erste Achse Z herum angeordnet ist, wobei die zweite kreisförmige Rippe (43) so konfiguriert ist, dass sie mit dem oberen Teil (16) des Schafts (14) und dem Hals (31) in Eingriff kommt; und wobei der Körper (11) und der Schaft (14) einen ersten Anschlag (21) für die zweite kreisförmige Rippe (43) des Griffs (18) bei der Verschiebung gemäß der ersten Achse Z aufweisen, wobei der erste Anschlag (21) so konfiguriert ist, dass es einen Spalt (22) zwischen dem Griff (18) und dem oberen Teil (16) des Schafts (14) bildet, wobei der erste Anschlag (21) ferner so gestaltet ist, dass er mindestens eine Kontaktfläche (32, 72, 73) mit der zweiten kreisförmigen Rippe (43) des Griffs (18) bildet, und wobei der Körper (11) einen zweiten Anschlag (23) für den Griff (18) bei Drehung gemäß der ersten Achse Z aufweist,
wobei die zweite kreisförmige Rippe (43) des Griffs (18) eine Innenfläche (24) aufweist, die so konfiguriert ist, dass sie eine lineare Führung des oberen Teils (16) des Schafts (14) gemäß der ersten Achse Z bildet, so dass eine Drehung des Griffs (18) um die erste Achse Z den Schaft (14) rotierend um die erste Achse Z relativ zum Körper (11) bewegt, um den Schieber (13) zwischen der offenen Position und der geschlossenen Position zu bewegen, und
wobei der Hals (31) eine Innenfläche (33) und eine Außenfläche (34) aufweist, wobei die Ventilvorrichtung **dadurch gekennzeichnet ist, dass** der Griff (18) aufweist:
a. eine erste kreisförmige Rippe (41), die um die erste Achse Z herum angeordnet ist und eine Innenfläche (42) aufweist, die zumindest teilweise in Kontakt mit der Außenfläche (34) des Halses (31) des Körpers (11) steht; und
b. die zweite kreisförmige Rippe (43) mit einer Innenfläche (44), die teilweise in Kontakt mit dem oberen Teil (16) des Schafts (14) steht, und einer Außenfläche (45), die teilweise in Kontakt mit der Innenfläche (33) des Halses (31) des Körpers (11) steht.

2. Ventilvorrichtung (10, 20) nach Anspruch 1, aufweisend eine lose Mutter (12), die konfiguriert ist, die Ventilvorrichtung (10, 20) mit dem Fluidnetz zu verbinden, wobei die lose Mutter (12) vorzugsweise aus Polymer besteht.

3. Ventilvorrichtung (10, 20) nach Anspruch 1 oder Anspruch 2, wobei der Hals (31) ferner eine obere Fläche (73) aufweist, die im Wesentlichen senkrecht zur ersten Achse Z verläuft, und die obere Fläche (73) eine der mindestens einen Kontaktfläche (32, 72, 73) des Halses (31) ist.

4. Ventilvorrichtung (10, 20) nach einem der vorhergehenden Ansprüche, wobei der Schaft (14) einen unrunden Abschnitt (15) aufweist.

5. Ventilvorrichtung (10, 20) nach einem der vorhergehenden Ansprüche, wobei der Schieber (13), der Schaft (14) und/oder der Griff (18) aus Kunststoff, vorzugsweise Polypropylen, besteht/bestehen.

6. Ventilvorrichtung (10, 20) nach einem der vorhergehenden Ansprüche, wobei der Körper (11) und/oder der Schaft (14) aus Polymer, vorzugsweise Polyphenylensulfid, besteht/bestehen.

7. Ventilvorrichtung (10, 20) nach Anspruch 6, wobei das Polymer Verstärkungsmaterialien enthält.

8. Ventilvorrichtung (10, 20) nach Anspruch 5, wobei der Kunststoff Verstärkungsmaterialien, vorzugsweise Kohlenstofffasern, und noch bevorzugter Glasfasern, enthält.

9. Ventilvorrichtung (10, 20) nach einem der vorhergehenden Ansprüche, wobei der Griff (18) eine Längsrippe (51) aufweist, die sich von der ersten kreisförmigen Rippe (41) entlang einer zweiten Achse X erstreckt, die im Wesentlichen senkrecht zur ersten Achse Z ist.

10. Ventilvorrichtung (10, 20) nach Anspruch 9, wobei der Griff (18) ferner mindestens eine zusätzliche Rippe (52, 53, 54) aufweist, die sich von der Längsrippe (51) aus erstreckt und die Längsrippe (51) schneidet, wobei jede der mindestens einen zusätzlichen Rippe (52, 53, 54) einen Anstellwinkel (55, 56, 57) zur Längsrippe (51) bildet.

11. Ventilvorrichtung (10, 20) nach Anspruch 10, wobei der Griff (18) mehrere zusätzliche Rippen (52, 53, 54) aufweist, wobei die einfallenden Winkel (55, 56, 57) vorzugsweise im Absolutwert gleich sind wie mindestens ein anderer (56, 57, 55).

12. Ventilvorrichtung (10, 20) nach Anspruch 10 oder 11, wobei die mindestens eine zusätzliche Rippe (52, 53, 54), die sich von der Längsrippe (51) aus erstreckt, senkrecht zur Längsrippe (51) steht.

13. Ventilvorrichtung (10, 20) nach Anspruch 11, wobei die zusätzlichen Rippen (52, 53, 54), die sich von der Längsrippe (51) erstrecken, auf beiden Seiten der Längsrippe (51) angeordnet sind.

14. Ventilvorrichtung (10, 20) nach einem der vorhergehenden Ansprüche, wobei der Körper (11) mindestens eine Rippe (64) aufweist, die sich vom Hals (31) radial im Wesentlichen senkrecht zur ersten Achse Z erstreckt.

15. Ventilvorrichtung (10, 20) nach einem der vorhergehenden Ansprüche, wobei sich der zylindrische Hals (31) von einer Basis (62) aus erstreckt und die Außenfläche (34) des zylindrischen Halses (31) eine Ausrundung (63) an der Basis (62) aufweist.

## Revendications

1. Vanne (10, 20) destiné à réguler un débit de fluide à partir d'un réseau de fluides, la vanne comprenant :
a. un corps (11) à travers lequel le fluide est destiné à s'écouler, configuré pour connecter la vanne (10, 20) au réseau de fluides ;
b. une porte (13) positionnée à l'intérieur du corps (11) et configurée pour se déplacer entre une position ouverte dans laquelle le fluide est destiné à s'écouler à travers le corps (11) et une position fermée dans laquelle le fluide n'est pas destiné à s'écouler à travers le corps (11) ;
c. une tige (14) s'étendant le long d'un premier axe Z comprenant une partie supérieure (16) et une partie inférieure (17), la partie inférieure (17) étant reliée à la porte (13) ; le corps (11) comprenant un col cylindrique (31) s'étendant autour du premier axe Z et adapté pour entourer la tige (14), le col (31) comprenant une surface plane interne (72) sensiblement perpendiculaire au premier axe Z et la surface plane interne (72) est l'une des au moins une surface de contact (21, 72) du col (31) ;
une poignée (18) comprenant une seconde nervure circulaire (43) positionnée autour du premier axe Z, la seconde nervure circulaire (43) étant configurée pour s'engager dans la partie supérieure (16) de la tige (14) et le col (31) ; et dans lequel le corps (11) et la tige (14) comprennent une première butée (21) pour la seconde nervure circulaire (43) de la poignée (18) en translation selon le premier axe Z, la première butée (21) étant configuré de manière à former un espace (22) entre la poignée (18) et la partie supérieure (16) de la tige (14), la première butée (21) étant en outre configuré pour former au moins une surface de contact (32, 72, 73) avec la seconde nervure circulaire (43) de la poignée (18), et dans lequel le corps (11) comprend une seconde butée (23) pour la poignée (18) en rotation selon le premier axe Z,
dans lequel la seconde nervure circulaire (43) de la poignée (18) comprend une surface intérieure (24) configurée pour former un guidage linéaire de la partie supérieure (16) de la tige (14) selon le premier axe Z, de sorte qu'une rotation de la poignée (18) autour du premier axe Z déplace en rotation la tige (14) autour du premier axe Z par rapport au corps (11) de manière à déplacer la porte (13) entre la position ouverte et la position fermée, et
dans lequel le col (31) comprend une surface intérieure (33) et une surface extérieure (34), la vanne étant **caractérisée en ce que** la poignée (18) comprend :
a. une première nervure circulaire (41) positionnée autour du premier axe Z, ayant une surface interne (42) au moins partiellement en contact avec la surface externe (34) du col (31) du corps (11) ; et
b. la seconde nervure circulaire (43) ayant une surface interne (44) partiellement en contact avec la partie supérieure (16) de la tige (14) et une surface externe (45) partiellement en contact avec la surface interne (33) du col (31) du corps (11).

2. Vanne (10, 20) selon la revendication 1, comprenant un écrou libre (12) configuré pour connecter la vanne (10, 20) au réseau de fluides, dans lequel l'écrou libre (12) est de préférence en polymère.

3. Vanne (10, 20) selon la revendication 1 ou la revendication 2, dans lequel le col (31) comprend en outre une surface supérieure (73) sensiblement perpendiculaire au premier axe Z et la surface supérieure (73) est l'une des au moins une surface de contact (32, 72, 73) du col (31).

4. Vanne (10, 20) selon l'une des revendications précédentes, dans lequel la tige (14) a une section non circulaire (15).

5. Vanne (10, 20) selon l'une des revendications précédentes, dans lequel la vanne (13), la tige (14) et/ou la poignée (18) sont/sont en plastique, de préférence en polypropylène.

6. Vanne (10, 20) selon l'une des revendications précédentes, dans lequel le corps (11) et/ou la tige (14) sont en polymère, de préférence du sulfure de polyphénylène.

7. Vanne (10, 20) selon la revendication 6, dans lequel le polymère contient des matériaux de renforcement.

8. Vanne (10, 20) selon la revendication 5, dans lequel le plastique contient des matériaux de renforcement, de préférence de la fibre de carbone, et plus de préférence des fibres de verre.

9. Vann (10, 20) selon l'une des revendications précédentes, dans lequel la poignée (18) comprend une nervure longitudinale (51) s'étendant de la première nervure circulaire (41) le long d'un second axe X, sensiblement perpendiculaire au premier axe Z.

10. Vanne (10, 20) selon la revendication 9, dans lequel la poignée (18) comprend en outre au moins une nervure supplémentaire (52, 53, 54) s'étendant de la nervure longitudinale (51) et sécante à la nervure longitudinale (51), chacune des nervures supplémentaires (52, 53, 54) formant un angle d'incidence (55, 56, 57) par rapport à la nervure longitudinale (51).

11. Vanne (10, 20) selon la revendication 10, dans lequel la poignée (18) comprend une pluralité de nervures supplémentaires (52, 53, 54), les angles d'incidence (55, 56, 57) étant de préférence égaux en valeur absolue à au moins un autre (56, 57, 55).

12. Vanne (10, 20) selon la revendication 10 ou 11, dans lequel la ou les nervures supplémentaires (52, 53, 54) s'étendant de la nervure longitudinale (51) sont perpendiculaires à la nervure longitudinale (51).

13. Vanne (10, 20) selon la revendication 11, dans lequel les nervures supplémentaires (52, 53, 54) s'étendant de la nervure longitudinale (51) sont positionnées de part et d'autre de la nervure longitudinale (51).

14. Vanne (10, 20) selon l'une des revendications précédentes, dans lequel le corps (11) comprend au moins une nervure (64) s'étendant du col (31) radialement sensiblement perpendiculaire au premier axe Z.

15. Vanne (10, 20) selon l'une des revendications précédentes, dans lequel le col cylindrique (31) s'étend à partir d'une base (62), et la surface extérieure (34) du col cylindrique (31) comprend un congé (63) à la base (62).
